# EUROPEAN PATENT APPLICATION

(11) **EP 4 230 022 A1**
(43) Date of publication of application: **23.08.2023**
(21) Application number: 23155352.0
(22) Date of filing: 07.02.2023
(51) Int. Cl.: A01D 75/18, A01F 15/08, G05B 23/02, G08B 21/18

(54) **SYSTEM AND METHOD OF MONITORING FUNCTIONAL STATUS OF A HEAT GENERATING COMPONENT OF A WORK MACHINE**

(30) Priority: 17.02.2022 US 202217651424
(71) Applicant: Deere & Company, Moline, IL 61265 (US)
(72) Inventor: Derscheid, Daniel E., Mannheim (DE)
(74) Representative: Stein, Stefan

(57) **Abstract**

A method of monitoring a component of a work machine includes establishing fault threshold range of the component including a range of values of electromagnetic radiation indicative of a potential failure of the component. A controller is configured for receiving data from an infrared sensor related to a current electromagnetic radiation value emitted from the component, and comparing the current electromagnetic radiation value to the fault threshold range of the component. The controller may automatically communicate a first control signal to a machine control device when the current electromagnetic radiation value is within the fault threshold range of the component. The first control signal may include a message warning of potential failure of the component, or may control a drive associated with the component to alter or stop operation of the component prior to failure.

## Description

### TECHNICAL FIELD

The disclosure generally relates to a work machine and a method of monitoring the operational status of a component of the work machine.

### BACKGROUND

Work machines are configured to perform a wide variety of tasks for use as construction machines, forestry machines, lawn maintenance machines, as well as on-road machines such as those used to plow snow, spread salt, or machines with towing capability. Additionally, work machines include agricultural machines, such as a tractor or a self-propelled combine-harvester, which include a prime mover that generates power to perform work. In the case of a tractor, for instance, the prime mover is often a diesel engine that generates power from a supply of diesel fuel. The diesel engine drives a transmission which moves wheels or treads to propel the tractor across a field at a designated speed. Tractors often include a power takeoff (PTO) which includes a shaft coupled to the transmission and driven by the engine to power a machine being pulled or pushed through a field by the tractor. Other agricultural work machines include machines pulled by a tractor, for instance, pull type combines, pull type harvesters, pull type balers, seeders, and spreaders. Work machines are also known as work vehicles.

Tractors can be steered through a field by a manual command provided by an operator located in a cab through a manually controlled steering device, such as a steering wheel or joystick, or by an automatic steering command. In the case of an automatic steering command, a steering control signal can be provided by a global positioning system (GPS) signal. Steering control systems often include one or more sensors configured to sense a position of the steering device or a position of the wheels with respect to a frame of the machine.

Harvesting machines, such as hay and foraging machines utilized in the processing of plant material can include mowers, conditioners, flail choppers, windrowers, combines, forage harvesters, and balers for both dry and silage uses. Such harvesting machines are often pulled by the tractor through a field. Self-propelled harvesting machinery is also known.

Historically, tractors and harvesting machines have been driven by an operator. One of the tasks the operator performed was to "listen" to the machine during operation to make sure there are no damaged or broken components on the machine. In some work vehicles, however, a damaged or broken component may not provide a sound that indicates a part is damaged or broken, and may only be noticed by a work machine failing to properly carry out an operation, i.e. a fault condition.

In some machines, temperature sensors are used to identify systems, parts, or devices, that are experiencing fault conditions. In some machines, temperature sensing is done with stationary thermocouples in engines, oil baths, or air intakes, for example. These sensors are connected by wire to a controller. Various sensors are also attached to moving parts, for example a rotating shaft. Communication to a processing unit can occur via wire with a slip ring, or wirelessly with a powered (battery powered) beacon; which are expensive and require frequent maintenance.

Today's agricultural equipment is becoming more complex with higher expectations for reliability. Predictive monitoring of equipment can reduce costly downtime, for example saving hay that needs to be baled when the rain clouds are rolling in. A machine that is failing to work as designed, may not be noticeable as there may not be warning signs to indicate that a part is failing or has failed. Additionally, an operator may not be present to detect machine malfunctions and/or failures if the machine is operating autonomously. What is needed, therefore, is a system to identify a fault condition in a machine part, device, or component, and in particular to identify a fault condition before the part experiencing the fault condition fails completely.

### SUMMARY

A method of monitoring a component of a work machine is provided. The method includes positioning an infrared sensor relative to the component to sense electromagnetic radiation emitted by the component during operation of the work machine. A fault threshold range of the component is established. The fault threshold range of the component is a range of values of electromagnetic radiation indicative of a potential failure of the component. A controller in communication with the infrared sensor is provided. The controller is configured for receiving data from the infrared sensor related to a current electromagnetic radiation value being emitted from the component. The controller may then compare the current electromagnetic radiation value to the fault threshold range of the component to determine if the current electromagnetic radiation value is within the fault threshold range of the component, or if the current electromagnetic radiation value is not within the fault threshold range of the component. The controller may automatically communicate a first control signal to a machine control device when the current electromagnetic radiation value is within the fault threshold range of the component.

In one aspect of the disclosure, the fault threshold range of the component is established for variable ambient operating conditions. As such, the fault threshold range may vary based on differing ambient operating conditions. For example, when the ambient temperature is higher, the fault threshold range of the component may be adjusted higher based on the increased ambient air temperature.

In one aspect of the disclosure, the method includes sensing the current electromagnetic radiation value emitted from the component with the infrared sensor. The current electromagnetic radiation value of the component sensed by the infrared sensor is in the infrared light spectrum. As such, the current electromagnetic radiation value includes a wavelength between approximately one millimeter and approximately seven hundred nanometers.

In one implementation of the disclosure, the method may include sensing a current electromagnetic radiation value emitted from a second component with the infrared sensor. The current electromagnetic radiation value of the second component sensed by the infrared sensor is in the infrared light spectrum. As such, the current electromagnetic radiation value includes a wavelength between approximately one millimeter and approximately seven hundred nanometers.

In one implementation of the disclosure, the controller may be configured for comparing the current electromagnetic radiation value of the component with the current electromagnetic value of the second component to determine if a variation between the current electromagnetic radiation value of the component and the current electromagnetic value of the second component is greater than a defined variation threshold, or if the variation between the current electromagnetic radiation value of the component and the current electromagnetic value of the second component is less than the defined variation threshold. The controller may automatically communicate the control signal to the machine control device when the variation between the current electromagnetic radiation value of the component and the current electromagnetic value of the second component is greater than the defined variation threshold.

In one implementation of the disclosure, a normal operation range of the component may be established. The normal operation range of the component is a range of values of electromagnetic radiation indicative of normal operation of the component. The controller may be configured to compare the current electromagnetic radiation value to the normal operation range of the component to determine if the current electromagnetic radiation value is within the normal operation range of the component, or if the current electromagnetic radiation value is not within the normal operation range of the component. The controller may automatically communicate a second control signal to the machine control device when the current electromagnetic radiation value is not within the normal operation range of the component and is not within the fault threshold range of the component. The second control signal may be different than the first control signal. For example, the second control signal may be configured as an informational notice that operation of the component is out of desired operating parameters, whereas the first control signal may be configured as a request for service or notification of likely failure of the component.

In one implementation of the disclosure, the machine control device may include a drive that is coupled to the component and configured to control operation of the component. The control signal may be configured to command adjustment of an operating parameter of the drive to alter operation of the component. For example, the control signal may be configured to cease operation of the component to prevent further damage to the component or other related structure.

In one implementation of the disclosure, the controller may be configured to automatically communicate a service notification to a location remote from the work machine when the current electromagnetic radiation value is within the fault threshold range of the component. For example, the controller may communicate with a system manager via a cloud-based communication and/or equipment monitoring service. The service notification may include, but is not limited to, a request for maintenance of the component and the location of the work machine.

In one implementation of the disclosure, the work machine may include a moveable platform having the infrared sensor permanently affixed to and moveable with the moveable platform. The method may include sensing the electromagnetic radiation emitted from the component while moving the work machine relative to a ground surface.

A work machine is also provided. The work machine includes a moveable platform that is operable to traverse relative to a ground surface. A component is attached to the moveable platform and is operable to generate heat during operation. An infrared sensor is attached to the moveable platform and is positioned to sense electromagnetic radiation emitted from the component. A controller is in communication with the infrared sensor for receiving data from the infrared sensor related to a current electromagnetic radiation value emitted from the component. The controller includes a processor and a memory having a monitoring algorithm stored therein. The processor is operable to execute the monitoring algorithm to compare the current electromagnetic radiation value to a fault threshold range of the component to determine if the current electromagnetic radiation value is within the fault threshold range of the component, or if the current electromagnetic radiation value is not within the fault threshold range of the component. The controller may automatically communicate a first control signal when the current electromagnetic radiation value is within the fault threshold range of the component.

In one aspect of the disclosure, the fault threshold range of the component is saved on the memory of the controller. The fault threshold range of the component includes a range of values of electromagnetic radiation indicative of a potential failure of the component.

In one aspect of the disclosure, the work machine may include a machine control device. The machine control device may be in communication with the controller and operable to receive the control signal from the controller. In one implementation, the machine control device may include a drive coupled to the component. The control signal may command adjustment of an operating parameter of the drive to alter operation of the component. For example, the control signal may reduce a rotational speed and/or cease operation of the component. In another implementation, the machine control device may include a visual display, and the control signal may command a message be communicated on the visual display. The message may include a warning, a light, a picture, a temperature, etc.

In one implementation of the disclosure, the processor is operable to execute the monitoring algorithm to automatically communicate a service notification to a remote location when the current electromagnetic radiation value is within the fault threshold range of the component. The service notification may include a request for service and/or maintenance, a location of the work machine, etc.

In one implementation of the disclosure, the memory may include a normal operation range of the component saved thereon. The normal operation range of the component is a range of values of electromagnetic radiation indicative of normal operation of the component. The processor may be operable to execute the monitoring algorithm to compare the current electromagnetic radiation value to the normal operation range of the component to determine if the current electromagnetic radiation value is within the normal operation range of the component, or if the current electromagnetic radiation value is not within the normal operation range of the component. The controller may automatically communicate a second control signal to the machine control device when the current electromagnetic radiation value is not within the normal operation range of the component and is not within the fault threshold range of the component. The second control signal may include, but is not limited to, a notification that the component is operating out of specifications, and may require future service.

Accordingly, the work machine and the method described herein enable the work machine to self-diagnose a potential failure of the component, thereby detecting potential failures of the component and providing the ability for the work machine to detect potential failures of the component when the work machine is operating autonomously without an operator. Maintenance of the work machine may therefore be scheduled prior to failure of the component, reducing downtime and potentially reducing or eliminating further damage to other features and/or structure of the work machine.

The above features and advantages and other features and advantages of the present teachings are readily apparent from the following detailed description of the best modes for carrying out the teachings when taken in connection with the accompanying drawings.

### BRIEF DESCRIPTION OF THE DRAWINGS

FIG. 1 is a schematic cross-sectional view of a work machine.
FIG. 2 is a schematic graph relating temperature and wavelength of electromagnetic radiation.

### DETAILED DESCRIPTION

Those having ordinary skill in the art will recognize that terms such as "above," "below," "upward," "downward," "top," "bottom," etc., are used descriptively for the figures, and do not represent limitations on the scope of the disclosure, as defined by the appended claims. Furthermore, the teachings may be described herein in terms of functional and/or logical block components and/or various processing steps. It should be realized that such block components may be comprised of any number of hardware, software, and/or firmware components configured to perform the specified functions.

Terms of degree, such as "generally", "substantially" or "approximately" are understood by those of ordinary skill to refer to reasonable ranges outside of a given value or orientation, for example, general tolerances or positional relationships associated with manufacturing, assembly, and use of the described embodiments.

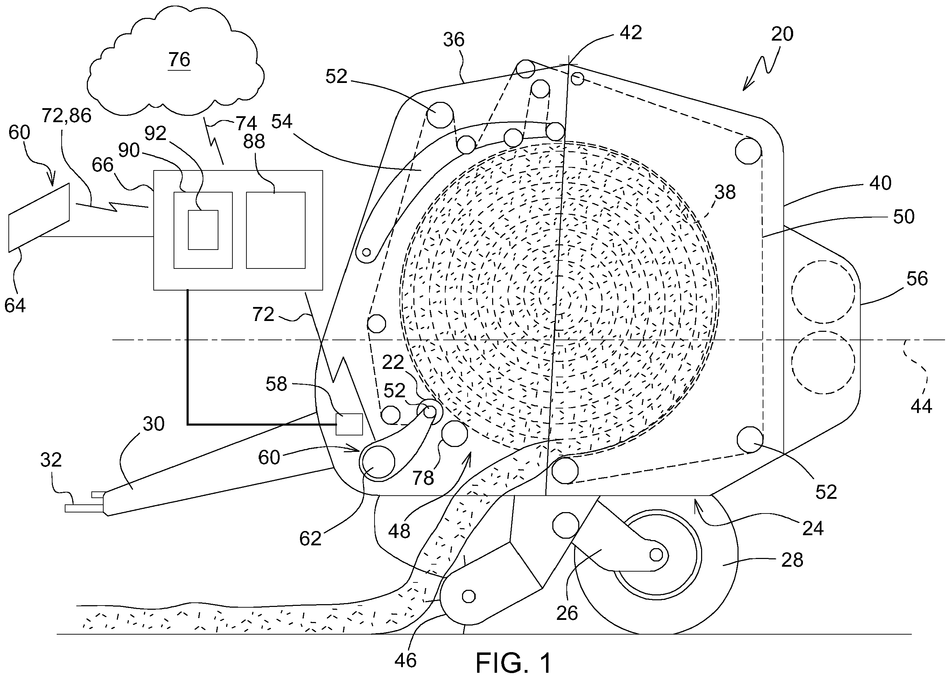

Referring to the Figures, wherein like numerals indicate like parts throughout the several views, a work machine is generally shown at 20. Referring to FIG. 1, the work machine 20 includes at least one component 22 that is operable to generate heat during operation. The work machine 20 may further include a moveable platform 24 that is operable to traverse or move relative to a ground surface. The heat generating component 22 may be attached to and moveable with the moveable platform 24. In one example implementation shown in the Figures and described herein, the work machine 20 is configured as a round baler. However, it should be appreciated that the work machine 20 may be configured differently than the example implementation described herein. For example, the work machine 20 may be configured as a tractor, a self-propelled windrower, a forage harvester, a combine, a large square baler, a planter, a tillage device, a bulldozer, a feller-buncher, a skid steer, a loader, an earth grader, an earth mover, etc. In yet other embodiments, the work machine 20 may include a stationary, non-moveable apparatus.

The moveable platform 24 of the work machine 20 includes a frame 26. One or more ground engaging elements 28, such as but not limited to one or more wheels and/or tracks, are attached to and rotatably supported by the frame 26. A tongue 30 may be coupled to the frame 26 at a forward end of the frame 26. A hitch arrangement 32 may be included with the tongue 30. The hitch arrangement 32 may be used to attach the round baler to a traction unit, such as but not limited to an agricultural tractor. In other embodiments, the work machine 20 may be self-propelled, in which case the traction unit and the work machine 20 are configured as a single, self-propelled vehicle.

As described above, the example implementation of the work machine 20 is configured as the round baler shown in the Figures. The round baler includes a housing 36 forming a baling chamber 38. The housing 36 is attached to and supported by the frame 26. The housing 36 may include one or more walls or panels that at least partially enclose and/or define the baling chamber 38. The round baler further includes a gate 40. The gate 40 is attached to and rotatably supported by the housing 36. The gate 40 is positioned adjacent a rearward end of the frame 26 and is pivotably moveable about a gate axis 42. The gate axis 42 is generally horizontal and perpendicular to a central longitudinal axis 44 of the frame 26. The gate 40 is moveable between a closed position for forming a bale within the baling chamber 38, and an open position for discharging the bale from the baling chamber 38.

The round baler includes a pick-up 46 disposed proximate the forward end of the frame 26. The pickup gathers crop material from a ground surface and directs the gathered crop material toward and into an inlet 48 of the baling chamber 38. The pickup may include, but is not limited to tines, forks, augers, conveyors, baffles, etc., for gathering and moving the crop material. The round baler may be equipped with a pre-cutter, disposed between the pickup and the inlet 48. As such, the pre-cutter is disposed downstream of the pickup and upstream of the inlet 48 relative to a direction of travel of the crop material. The pre-cutter cuts or chops the crop material into smaller pieces.

The round baler may be configured as a variable chamber baler, or as a fixed chamber baler. The round baler shown in the Figures and described herein is depicted and described as a variable chamber baler. As is understood by those skilled in the art, the variable chamber baler includes a plurality of longitudinally extending side-by-side forming belts 50 that are supported by a plurality of rollers 52. The bale is formed by the forming belts 50 and one or more side walls of the housing 36.

The crop material is directed through the inlet 48 and into the baling chamber 38, whereby the forming belts 50 roll the crop material in a spiral fashion into the bale having a cylindrical shape. The belts 50 apply a constant pressure to the crop material as the crop material is formed into the bale. A belt tensioner 54 continuously moves the forming belts 50 radially outward relative to a center of the cylindrical bale as the diameter of the bale increases. The belt tensioner 54 maintains the appropriate tension in the belts 50 to obtain the desired density of the crop material.

The round baler includes a wrap system 56. The wrap system 56 is operable to wrap the bale with a wrap material inside the baling chamber 38. Once the bale is formed to a desired size, the wrap system 56 feeds the wrap material into the baling chamber 38 to wrap the bale and thereby secure the crop material in a tight package and maintain the desired shape of the bale. The wrap material may include, but is not limited to, a twine, a net mesh, or a solid plastic wrap. Movement of the gate 40 into the open position simultaneously moves the belts 50 clear of the formed bale, and allows the formed and wrapped bale to be discharged through the rear of the baling chamber 38.

As described above, the work machine 20 includes the component 22 that generates heat during operation or use. In the example implementation of the work machine 20 described herein, in which the work machine 20 is configured as the round baler, the component 22 may include, but is not limited to, a bearing, an electric motor, a gearbox, a belt, etc. In other implementations, the moveable component 22 may include, but is not limited to, a hydraulic motor, a fan, a pump, a conveyor, a shaft, etc. It should be appreciated that the heat generating component 22 may be implemented to include other systems, mechanisms, features, etc., not described herein.

The work machine 20 includes an infrared sensor 58. In the example implementation, the infrared sensor 58 is affixed to and moveable with the moveable platform 24. The infrared sensor 58 is positioned to sense electromagnetic radiation emitted from the heat generating component 22. In other implementations, the infrared sensor 58 may not be directly attached to a support structure of the work machine 20, e.g., the moveable platform 24.

The infrared sensor 58 may include a device that is capable of sensing data related to electromagnetic radiation in the infrared light spectrum. As is generally understood by those skilled in the art, the infrared light spectrum includes light having a wavelength between approximately one millimeter (1 mm) and approximately seven hundred nanometers (700 nm). As understood by those skilled in the art, the precise limits of the infrared light spectrum are not precisely defined. As such, the example wavelengths of the infrared light spectrum are generally accepted as approximate limits. As such, it should be appreciated that the infrared sensor 58 may sense light having a wavelength that varies slightly from the example infrared wavelength range described herein. In one example implementation, the infrared sensor 58 may include, but is not limited to, an infrared image capture device, e.g., an infrared camera. However, it should be appreciated that the infrared sensor 58 may include some other device not specifically mentioned or described herein.

The work machine 20 further includes a machine control device 60. The machine control device 60 is disposed in communication with a controller 66, described in greater detail below. The machine control device 60 is operable to receive a control signal 72 from the controller 66 and execute or perform a function. The machine control device 60 may include, but is not limited to, a motor, a clutch, a visual display 64, a controller 66, a computer, a switch, an actuator, a hydraulic cylinder, a communicator, etc.

In one example implementation, the machine control device 60 includes a drive 62 coupled to the heat generating component 22. The drive 62 may include, but is not limited to, a belt tensioner 54, a brake, a hydraulic cylinder, a clutch, or some other mechanism capable of engaging/disengaging movement of the heat generating component 22 and/or cause the heat generating component 22 to move or stop moving.

In another example implementation, the machine control device 60 may include, but is not limited to, a visual display 64. The visual display 64 may include, but is not limited to a touch screen display, a warning light indicator, etc. The visual display 64 may include a device capable of communicating a message visually based on a control signal 72 from a controller 66. For example, the visual display 64 may include a device capable of displaying a text message, displaying a picture, a graph, a chart, a photo, etc. In one implementation, the visual display 64 is configured to display an image of the component 22 in combination with a color to indicate a current electromagnetic radiation value being emitted by the component 22. In another implementation, the visual display 64 may be configured to display a warning message or notification indicating likely failure of the heat generating component 22, or a need for future maintenance for the heat generating component 22.

As described above, the work machine 20 includes the controller 66. The controller 66 is disposed in communication with the infrared sensor 58 and the machine control device 60. The controller 66 is operable to receive data from the infrared sensor 58 related to a current electromagnetic radiation value emitted from the component 22, and communicate the control signal 72 to the machine control device 60. While the controller 66 is generally described herein as a singular device, it should be appreciated that the controller 66 may include multiple devices linked together to share and/or communicate information therebetween. Furthermore, it should be appreciated that the controller 66 may be located on the work machine 20 or located remotely from the work machine 20.

The controller 66 may alternatively be referred to as a computing device, a computer, a control unit, a control module, a module, etc. The controller 66 includes a processor 88, a memory 90, and all software, hardware, algorithms, connections, sensors, etc., necessary to manage and control the operation of the infrared sensor 58 and the machine control device 60. As such, a method may be embodied as a program or algorithm operable on the controller 66. It should be appreciated that the controller 66 may include any device capable of analyzing data from various sensors, comparing data, making decisions, and executing the required tasks.

As used herein, "controller" is intended to be used consistent with how the term is used by a person of skill in the art, and refers to a computing component with processing, memory, and communication capabilities, which is utilized to execute instructions (i.e., stored on the memory 90 or received via the communication capabilities) to control or communicate with one or more other components. In certain embodiments, the controller 66 may be configured to receive input signals in various formats (e.g., hydraulic signals, voltage signals, current signals, CAN messages, optical signals, radio signals), and to output command or communication signals in various formats (e.g., hydraulic signals, voltage signals, current signals, CAN messages, optical signals, radio signals).

The controller 66 may be in communication with other components on the work machine 20, such as hydraulic components, electrical components, and operator inputs within an operator station of an associated work vehicle. The controller 66 may be electrically connected to these other components by a wiring harness such that messages, commands, and electrical power may be transmitted between the controller 66 and the other components. Although the controller 66 is referenced in the singular, in alternative embodiments the configuration and functionality described herein can be split across multiple devices using techniques known to a person of ordinary skill in the art.

The controller 66 may be embodied as one or multiple digital computers or host machines each having one or more processors, read only memory (ROM), random access memory (RAM), electrically-programmable read only memory (EPROM), optical drives, magnetic drives, etc., a high-speed clock, analog-to-digital (A/D) circuitry, digital-to-analog (D/A) circuitry, and any required input/output (I/O) circuitry, I/O devices, and communication interfaces, as well as signal conditioning and buffer electronics.

The computer-readable memory 90 may include any non-transitory/tangible medium which participates in providing data or computer-readable instructions. The memory 90 may be non-volatile or volatile. Non-volatile media may include, for example, optical or magnetic disks and other persistent memory. Example volatile media may include dynamic random access memory (DRAM), which may constitute a main memory. Other examples of embodiments for memory 90 include a floppy, flexible disk, or hard disk, magnetic tape or other magnetic medium, a CD-ROM, DVD, and/or any other optical medium, as well as other possible memory devices such as flash memory.

The controller 66 includes the tangible, non-transitory memory 90 on which are recorded computer-executable instructions, including a monitoring algorithm 92. The processor 88 of the controller 66 is configured for executing the monitoring algorithm 92. The monitoring algorithm 92 implements a method of monitoring the component 22 of the work machine 20.

The method of monitoring the heat generating component 22 of the work machine 20 includes positioning the infrared sensor 58 relative to the component 22 to sense electromagnetic radiation emitted by the component 22 during operation of the work machine 20. The component 22 generates heat during operation. The heat from the component 22 generates or emits electromagnetic radiation. The electromagnetic radiation includes a wavelength in the infrared light spectrum. The infrared sensor 58 may be positioned at any location 76 that enables the infrared sensor 58 to detect or sense the electromagnetic radiation emitted from the component 22 during operation. If the work vehicle is configured to include the moveable platform 24, then the infrared sensor 58 may be directly attached to and moveable with the moveable platform 24. However, in other implementations when the work machine 20 is configured as a stationary unit, the infrared sensor 58 need not be directly attached to the work machine 20.

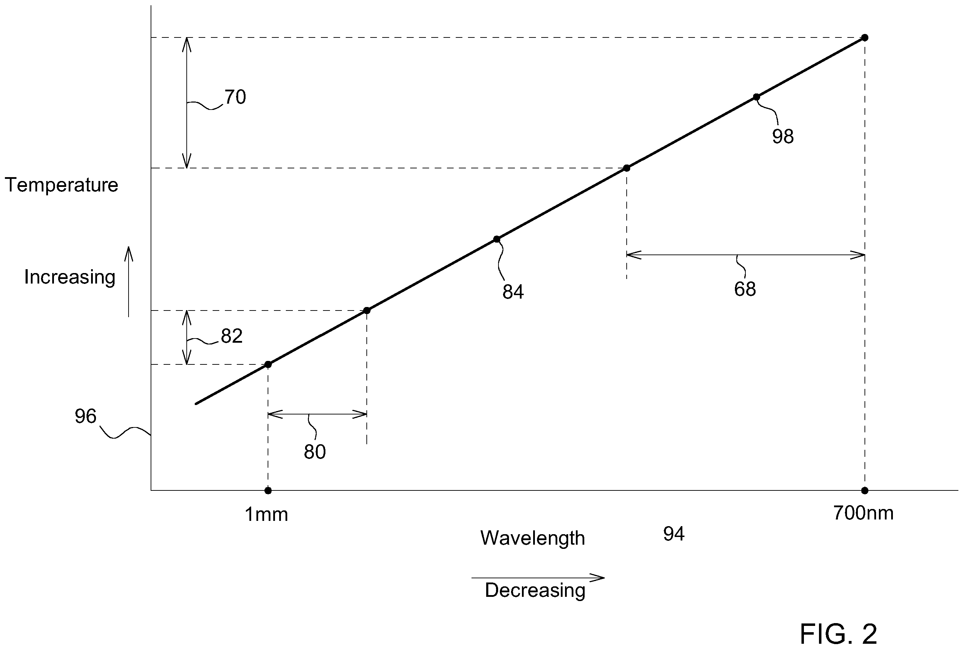

A fault threshold range 68 of the component 22 is established and saved on the memory 90 of the controller 66. The fault threshold range 68 of the component 22 is a range of values of electromagnetic radiation, e.g., a value of the wavelength of the electromagnetic radiation, indicative of a potential and/or imminent failure of the component 22. Referring to FIG. 2, a graph relating wavelength of electromagnetic radiation to temperature is generally shown. The wavelength of electromagnetic radiation is generally shown along an X-axis, and temperature is generally indicated along a Y-axis 96. The fault threshold range 68 may be established for the particular implementation, configuration, and/or operation of the component 22. For example, a component 22 manufactured from a first material, such as but not limited to a metal, may include a different fault threshold range 68 than a component 22 manufactured from a second material, such as but not limited to a plastic. It should be appreciated that the fault threshold range 68 may be dependent upon many factors, including but not limited to, the material, shape, manufacturing tolerances, operating conditions, etc. As such, specific values of the fault threshold range 68 are not defined herein. The fault threshold range 68 of the component 22 may be established and/or otherwise determined through testing and experimentation.

Referring to FIG. 2, and as understood by those skilled in the art, electromagnetic radiation associated with higher temperatures has a shorter wavelength than electromagnetic radiation associated with lower temperatures. As such, as the temperature of the component 22 increases, the wavelength of the electromagnetic radiation decreases. In contrast, as the temperature of the component 22 decreases, the wavelength of the electromagnetic radiation increases. The fault threshold range 68 is defined to include values that are associated with heat levels generated from the component 22 during operation that indicate a failure of the component 22 or a likely failure of the component 22 if operation at that heat level is maintained. Because the wavelength of the electromagnetic radiation decreases as the temperature increases, the fault threshold range 68 may be defined to include a range including wavelengths at the shorter end of the infrared light spectrum, i.e., wavelengths shorter than a determined threshold.

In one implementation, the fault threshold range 68 of the component 22 may be established for variable ambient operating conditions. In other words, the fault threshold range 68 may vary or differ based on different ambient operating conditions. For example, the fault threshold range 68 may differ or vary based on the ambient air temperature. As the ambient air temperature increases, the electromagnetic radiation emitted from the component 22 may also increase. The minimum heat level that may indicate damage and/or potential failure of the component 22 may similarly increase with the increase in the ambient air temperature. As such, the fault threshold range 68 may vary for different ambient air temperatures, and or be defined based on the ambient air temperatures. It should be appreciated that the fault threshold range 68 may be established and/or vary based on ambient operating conditions other than the example of the ambient air temperature described herein.

As described above, the value of the electromagnetic radiation emitted from the component 22 is directly related to a temperature of the component 22. The controller 66 may be configured to convert the value of the electromagnetic radiation to a temperature. In one implementation of the method, the fault threshold range 68 of the component 22 may be correlated to a temperature range 70. The temperature range 70 associated with the fault threshold range 68 may be saved on the memory 90 of the controller 66. The controller 66 may thus convert between the value of the electromagnetic radiation and a temperature. Outputs from the controller 66 may thus be made in terms of the temperature of the component 22 relative to the temperature range 70 of the fault threshold range 68, instead of values of the electromagnetic radiation, e.g., the wavelength of the electromagnetic radiation.

The work machine 20 may be engaged, such that the component 22 operates, thereby generating heat and emitting a level or amount of electromagnetic radiation that differs from surrounding structure of the work machine 20. A current electromagnetic radiation value emitted from the component 22 is sensed with the infrared sensor 58. If the work machine 20 is configured as a moveable platform 24, the current electromagnetic radiation value may be sensed while moving the work machine 20 relative to a ground surface. Data from the infrared sensor 58 related to the current electromagnetic radiation value being emitted from the component 22 is communicated to the controller 66.

The controller 66 receives the data from the infrared sensor 58 related to the current electromagnetic radiation value being emitted from the component 22. Optionally the controller 66 may correlate or convert the current electromagnetic radiation value to a current temperature of the component 22 as described above.

The controller 66 may then compare the current electromagnetic radiation value being emitted from the component 22 to the fault threshold range 68 of the component 22. The controller 66 makes the comparison between the current electromagnetic radiation value and the fault threshold range 68 to determine if the current electromagnetic radiation value is within the fault threshold range 68 of the component 22, or if the current electromagnetic radiation value is not within the fault threshold range 68 of the component 22.

When the controller 66 determines that the current electromagnetic radiation value is within the fault threshold range 68 of the component 22, such as indicated by point 98 in FIG. 2, the controller 66 may then automatically communicate a first control signal 72 to the machine control device 60. As described above, values of the current electromagnetic radiation value that are within the fault threshold range 68 indicate that the component 22 has failed, is likely to fail, or may require maintenance to prevent failure.

In one example implementation, the machine control device 60 includes the drive 62 that is coupled to the component 22 and configured to control operation of the component 22. The control signal 72 may command adjustment of an operating parameter of the drive 62 to alter operation of the component 22. For example, the control signal 72 may command the drive 62 to stop or cease operation of the component 22, or may command the drive 62 to slow operation of the component 22. By slowing movement of the component 22, the amount of heat generated by the component 22 during operation may be reduced, thereby lowering the temperature of the component 22 and potentially preventing or limiting damage to the component 22 or other associated structure of the work machine 20. Similarly, stopping movement of the component 22 prevents the component 22 from generating additional heat, thereby preventing or limiting further damage to the component 22. It should be appreciated that the function of the control signal 72 is dependent upon the particular function and operation of the drive 62. As such, the control signal 72 will vary with the particular implementation of the drive 62. Because the controller 66 automatically communicates the first control signal 72, the work machine 20 is capable of detecting and preventing damage to the component 22 autonomously, e.g., without the presence of a human operator.

In one implementation, the machine control device 60 includes the visual display 64. The control signal 72 may be configured to command a message on the visual display 64. For example, the control signal 72 may command a message that includes a warning light, a warning notification, an identification of the component 22 and an associated warning, etc. The message may be presented to an operator of the work machine 20 or an associated vehicle, such as but not limited to a tractor coupled to the work machine 20. It should be appreciated that the control signal 72 may command adjustment to the drive 62 and command the message on the visual display 64.

In one implementation, a respective identification color for each of a plurality of electromagnetic radiation ranges may be defined and saved in the memory 90 of the controller 66. Each respective identification color may include a color in a visible light spectrum. Each respective color may be associated with a temperature or temperature range. The controller 66 may correlate the current electromagnetic radiation value sensed by the infrared sensor 58 to the respective identification color associated with the electromagnetic radiation range the current electromagnetic radiation value is within. The control signal 72 may be configured to control the visual display 64 to display an image of the component 22 and the respective identification color correlated to the current electromagnetic radiation value. By so doing, a magnitude of the temperature of the component 22 and/or a magnitude of the value of the electromagnetic radiation currently be emitted by the component 22 may be communicated to the operator. For example, a first or lower temperature may be indicated by yellow, a second or midrange temperature may be indicated by orange, and a third or high range temperature may be indicated by red.

In one implementation of the method, when the current electromagnetic radiation value is within the fault threshold range 68 of the component 22, the controller 66 may be configured to automatically communicate a service notification 74. The service notification 74 may be communicated to a location 76 remote from the work machine 20. The service notification 74 may include a request for service, may include an identification of the component 22, may include an urgency of the need for maintenance, may include a location 76 of the work machine 20, etc. The remote location 76 may include, but is not limited to, a system manager's office, a system monitoring network, a user account, etc. The service notification 74 may be communicated wirelessly, such as but not limited to a cellular connection or a network connection.

In one implementation of the method described herein, the infrared sensor 58 may be configured to sense a current electromagnetic radiation value emitted from a second component 78. The infrared sensor 58 may include a single sensor positioned to sense the electromagnetic radiation from both the first component 22 and the second component 78. In other implementations, the infrared sensor 58 may include a first sensor head positioned relative to the first component 22 for sensing the electromagnetic radiation from the first component 22, and a second sensor head positioned relative to the second component 78 for sensing the electromagnetic radiation from the second component 78.

The controller 66 may compare the current electromagnetic radiation value of the first component 22 with the current electromagnetic value of the second component 78 to determine if a variation between the current electromagnetic radiation value of the first component 22 and the current electromagnetic value of the second component 78 is greater than a defined variation threshold, or if the variation between the current electromagnetic radiation value of the component 22 and the current electromagnetic value of the second component 78 is less than the defined variation threshold. A significant variation between the electromagnetic radiation from the first component 22 and the electromagnetic radiation from the second component 78 may indicate that one of the first component 22 and the second component 78 is not operating properly and requires maintenance. When the variation between the current electromagnetic radiation value of the first component 22 and the current electromagnetic value of the second component 78 is greater than the defined variation threshold, the controller 66 may be configured to automatically communicate the control signal 72 to the machine control device 60, such as described above.

A normal operation range 80 of the component 22 may be established and saved on the memory 90 of the controller 66. The normal operation range 80 of the component 22 is a range of values of electromagnetic radiation indicative normal operation of the component 22. The normal operation range 80 may be established for the particular implementation, configuration, and/or operation of the component 22. For example, a component 22 manufactured from a first material, such as but not limited to a metal, may include a different normal operation range 80 than a component 22 manufactured from a second material, such as but not limited to a plastic. It should be appreciated that the normal operation range 80 may be dependent upon many factors, including but not limited to, the material, shape, manufacturing tolerances, operating conditions, etc. As such, specific values of the normal operation range 80 are not defined herein. The normal operation range 80 of the component 22 may be established and/or otherwise determined through testing and experimentation.

In one implementation, the normal operation range 80 of the component 22 may be established for variable ambient operating conditions. In other words, the normal operation range 80 may vary or differ based on different ambient operating conditions. For example, the normal operation range 80 may differ or vary based on the ambient air temperature. As the ambient air temperature increases, the electromagnetic radiation emitted from the component 22 may also increase. The heat level that may indicate normal operation of the component 22 may similarly increase with the increase in the ambient air temperature. As such, the normal operation range 80 may vary for different ambient air temperatures, and or be defined based on the ambient air temperatures. It should be appreciated that the normal operation range 80 may be established and/or vary based on ambient operating conditions other than the example of the ambient air temperature described herein.

As described above, the value of the electromagnetic radiation emitted from the component 22 is directly related to a temperature of the component 22. The controller 66 may be configured to convert the value of the electromagnetic radiation to a temperature. In one implementation of the method, the normal operation range 80 of the component 22 may be correlated to a temperature range 82. The temperature range 82 associated with the normal operation range 80 may be saved on the memory 90 of the controller 66. The controller 66 may thus convert between the value of the electromagnetic radiation and a temperature. Outputs from the controller 66 may thus be made in terms of the temperature of the component 22 relative to the temperature range 82 of the normal operation range 80, instead of values of the electromagnetic radiation, e.g., the wavelength of the electromagnetic radiation.

The controller 66 may be configured to compare the current electromagnetic radiation value to the normal operation range 80 of the component 22 to determine if the current electromagnetic radiation value being emitted from the component 22 is within the normal operation range 80 of the component 22, or if the current electromagnetic radiation value is not within the normal operation range 80 of the component 22. As noted above, a current value of electromagnetic radiation being emitted from the component 22 that is within the normal operation range 80 indicates that the component 22 is operating properly. However, a current value of electromagnetic radiation being emitted from the component 22 that is not within the normal operation range 80 may indicate a potential concern related to the component 22, e.g., a potential or future failure. It should be appreciated that the current value of the electromagnetic radiation being emitted from the component 22 may not be within the fault threshold range 68, thereby not automatically triggering the first control signal 72 warning of immediate or imminent failure, but may also not be within the normal operating range, such as indicated by point 84 in FIG. 2. When the current value of the electromagnetic radiation being emitted from the component 22 is between the fault threshold range 68 and the normal operation range 80, such as shown by point 84 in FIG. 2, a potential concern or a potential failure of the component 22 may exist, but may not be significant enough to require immediate remedial action such as occurs when the current value of the electromagnetic radiation being emitted from the component 22 is within the fault threshold range 68.

When the current electromagnetic radiation value is not within the normal operation range 80 of the component 22 and is not within the fault threshold range 68 of the component 22, the controller 66 may be configured to automatically communicate a second control signal 86 to the machine control device 60. In one implementation, the machine control device 60 may include the visual display 64. The second control signal 86 may be configured to command a message on the visual display 64. For example, the second control signal 86 may command a message that includes a warning light, a warning notification, an identification of the component 22 and an associated warning, etc. The message may be presented to an operator of the work machine 20 or an associated vehicle, such as but not limited to a tractor coupled to the work machine 20. By so doing, the second control signal 86 may notify the operator of a potential concern with the component 22 prior to detecting a potential failure of the component 22, i.e., when the temperature of the component 22 reaches the fault threshold range 68. By so doing, the controller 66 may implement a two-tiered warning system, in which the controller 66 may notify the operator when the temperature of the component 22 exceeds the normal operation range 80, and may provide another more urgent warning to the operator when the temperature of the component 22 exceeds the fault threshold range 68.

As used herein, "e.g." is utilized to non-exhaustively list examples, and carries the same meaning as alternative illustrative phrases such as "including," "including, but not limited to," and "including without limitation." As used herein, unless otherwise limited or modified, lists with elements that are separated by conjunctive terms (e.g., "and") and that are also preceded by the phrase "one or more of," "at least one of," "at least," or a like phrase, indicate configurations or arrangements that potentially include individual elements of the list, or any combination thereof. For example, "at least one of A, B, and C" and "one or more of A, B, and C" each indicate the possibility of only A, only B, only C, or any combination of two or more of A, B, and C (A and B; A and C; B and C; or A, B, and C). As used herein, the singular forms "a", "an" and "the" are intended to include the plural forms as well, unless the context clearly indicates otherwise. Further, "comprises," "includes," and like phrases are intended to specify the presence of stated features, steps, operations, elements, and/or components, but do not preclude the presence or addition of one or more other features, steps, operations, elements, components, and/or groups thereof.

The detailed description and the drawings or figures are supportive and descriptive of the disclosure, but the scope of the disclosure is defined solely by the claims. While some of the best modes and other embodiments for carrying out the claimed teachings have been described in detail, various alternative designs and embodiments exist for practicing the disclosure defined in the appended claims.

## Claims

1. A method of monitoring a component (22) of a work machine (20), the method comprising:
positioning an infrared sensor (58) relative to the component (22) to sense electromagnetic radiation emitted by the component (22) during operation of the work machine (20);
establishing a fault threshold range (68) of the component (22), wherein the fault threshold range (68) of the component (22) is a range of values of electromagnetic radiation indicative of a potential failure of the component (22);
providing a controller (66) in communication with the infrared sensor (58), wherein the controller (66) is configured for:
receiving data from the infrared sensor (58) related to a current electromagnetic radiation value being emitted from the component (22);
comparing the current electromagnetic radiation value to the fault threshold range (68) of the component (22) to determine if the current electromagnetic radiation value is within the fault threshold range (68) of the component (22), or if the current electromagnetic radiation value is not within the fault threshold range (68) of the component (22); and
automatically communicating a first control signal (72) to a machine control device (60) when the current electromagnetic radiation value is within the fault threshold range (68) of the component (22).

2. The method set forth in claim 1, further comprising sensing the current electromagnetic radiation value emitted from the component (22) with the infrared sensor (58), wherein the current electromagnetic radiation value of the component (22) includes a wavelength between one millimeter and seven hundred nanometers.

3. The method set forth in claim 1 or 2, further comprising establishing a normal operation range (80) of the component (22), wherein the normal operation range (80) of the component (22) is a range of values of electromagnetic radiation indicative of normal operation of the component (22).

4. The method according to at least one of the preceding claims, wherein the controller (66) is configured for comparing the current electromagnetic radiation value to the normal operation range (80) of the component (22) to determine if the current electromagnetic radiation value is within the normal operation range (80) of the component (22), or if the current electromagnetic radiation value is not within the normal operation range (80) of the component (22).

5. The method according to at least one of the preceding claims, wherein the controller (66) is configured for automatically communicating a second control signal (86) to the machine control device (60) when the current electromagnetic radiation value is not within the normal operation range (80) of the component (22) and is not within the fault threshold range (68) of the component (22).

6. The method according to at least one of the preceding claims, wherein the machine control device (60) includes a drive (62) coupled to the component (22), and wherein the control signal commands adjustment of an operating parameter of the drive (62) to alter operation of the component (22).

7. The method according to at least one of the preceding claims, wherein the controller (66) is configured for automatically communicating a service notification (74) to a location (76) remote from the work machine (20) when the current electromagnetic radiation value is within the fault threshold range (68) of the component (22).

8. The method according to at least one of the preceding claims, wherein the work machine (20) includes a moveable platform (24) having the infrared sensor (58) permanently affixed to and moveable with the moveable platform (24), and wherein the method includes sensing the electromagnetic radiation emitted from the component (22) while moving the work machine (20) relative to a ground surface.

9. A work machine (20) comprising:
a moveable platform (24) operable to traverse relative to a ground surface;
a component (22) attached to the moveable platform (24), wherein the component (22) is operable to generate heat during operation;
an infrared sensor (58) attached to the moveable platform (24) and positioned to sense electromagnetic radiation emitted from the component (22);
a controller (66) in communication with the infrared sensor (58) for receiving data from the infrared sensor (58) related to a current electromagnetic radiation value emitted from the component (22), the controller (66) including a processor (88) and a memory (90) having a monitoring algorithm (92) stored therein, wherein the processor (88) is operable to execute the monitoring algorithm (92) to:
compare the current electromagnetic radiation value to a fault threshold range (68) of the component (22) to determine if the current electromagnetic radiation value is within the fault threshold range (68) of the component (22), or if the current electromagnetic radiation value is not within the fault threshold range (68) of the component (22); and
automatically communicate a first control signal (72) when the current electromagnetic radiation value is within the fault threshold range (68) of the component (22).

10. The work machine (20) set forth in claim 9, wherein the fault threshold range (68) of the component (22) is saved on the memory (90) of the controller (66), and includes a range of values of electromagnetic radiation indicative of a potential failure of the component (22).

11. The work machine (20) set forth in claim 9 or 10, further comprising a machine control device (60) in communication with the controller (66) and operable to receive the control signal from the controller (66).

12. The work machine (20) according to at least one of the claims 9 to 11, wherein the machine control device (60) includes a drive (62) coupled to the component (22), and wherein the control signal commands adjustment of an operating parameter of the drive (62) to alter operation of the component (22).

13. The work machine (20) according to at least one of the claims 9 to 12, wherein the processor (88) is operable to execute the monitoring algorithm (92) to automatically communicate a service notification (74) to a remote location (76) when the current electromagnetic radiation value is within the fault threshold range (68) of the component (22).

14. The work machine (20) according to at least one of the claims 9 to 13, wherein the memory (90) includes a normal operation range (80) of the component (22) saved thereon, wherein the normal operation range (80) of the component (22) is a range of values of electromagnetic radiation indicative of normal operation of the component (22), and wherein the processor (88) is operable to execute the monitoring algorithm (92) to compare the current electromagnetic radiation value to the normal operation range (80) of the component (22) to determine if the current electromagnetic radiation value is within the normal operation range (80) of the component (22), or if the current electromagnetic radiation value is not within the normal operation range (80) of the component (22).

15. The work machine (20) according to at least one of the claims 9 to 14, wherein the processor (88) is operable to execute the monitoring algorithm (92) to automatically communicate a second control signal (86) to the machine control device (60) when the current electromagnetic radiation value is not within the normal operation range (80) of the component (22) and is not within the fault threshold range (68) of the component (22).
